# EUROPÄISCHE PATENTANMELDUNG

(11) **EP 0 684 198 A1**
(43) Veröffentlichungstag der Anmeldung: **29.11.1995**
(21) Anmeldenummer: 95107857.5
(22) Anmeldetag: 23.05.1995
(51) Int. Cl.: B65G 65/22

(54) **Fördergerät zum Ein- und Auslagern von Getreide oder dergleichen**

(30) Priorität: 27.05.1994 DE 9408731 U
(71) Anmelder: CanAgro GmbH, D-65207 Wiesbaden (DE)
(72) Erfinder: Kaiser, Wolfgang, D-65207 Wiesbaden (DE)
(74) Vertreter: Schubert, Siegmar, Dipl.-Ing.

(57) **Zusammenfassung**

Bei einem Fördergerät zum Ein- und Auslagern von Getreide oder dergleichen auf bzw. von Flachlagern weist eine Längsförderschnecke (1) ein annähernd mittig angeordnetes Fahrgestell und einen Einzugskorb (2) auf, der mit einem Ladegerät beschickt werden kann. Um eine Beschädigung des Bodens des Flachlagers, in dem das Fördergerät fördert, zu vermeiden, ist als Ladegerät eine Zuführschnecke (12) vorgesehen, deren erstes Ende (14) den Einzugskorb (2) überdeckend an der Längsförderschnecke (1) um eine im wesentlichen vertikale Achse (16) schwenkbar gelagert ist. Dabei stützt sich ein Endbereich der Längsförderschnecke (1) auf einer Fahrkonsole (3) ab. Mit der Fahrkonsole steht ein Bock (6) in Verbindung, der sich über dem ersten Ende der Zuführschnecke (12) erhebt. Oben an den Bock (6) ist eine Seilrolle (11) seitlich auslenkbar aufgehängt, über welche ein Seil (10) läuft, welches einerseits mit dem Endbereich der Längsförderschnecke (1) in Verbindung steht und andererseits an einer zu dem ersten Ende der Zuführschnecke entfernten Stelle (13) an der Zuführschnecke (12) angebracht ist.

## Beschreibung

Die Erfindung betrifft ein Fördergerät zum Ein-und Auslagern von Getreide oder dergleichen auf bzw. von Flachlagern,mit einer Längsförderschnekke, die ein annähernd mittig angeordnetes Fahrgestell und einen Einzugskorb aufweist, der mit einem Ladegerät beschickbar ist.

Das Fördergerät eignet sich insbesondere zum Ein- und Auslagern von Getreide, welches auf einem Flachlager abgekippt ist bzw. dort als Getreideberg vorliegt. Es können außer Getreide aber auch ähnliche Materialien, wie Dünger und Pellets ein- oder ausgelagert werden.

Bekannt sind zum Ein- und Auslagern solcher Materialien Radlader oder Kräne bzw. Bagger, die gegebenenfalls mit zu beschickenden Förderbändern zusammenwirken. Beim Betrieb solcher Radlader, Kräne oder Bagger besteht die Gefahr, daß Greifwerkzeuge oder dergleichen Belüftungskanäle zerstören, die auf dem Boden der Flachlager in typischer Weise vorgesehen sind. Die Belüftungskanäle können durch Schläuche dargestellt sein.

Zum Beschicken von Silotankwagen sind auch Längsförderschnecken, die auch als Hauptschnekken bezeichnet werden können, bekannt, die den Vorteil haben, daß die Beschickung ohne Verrükken dieses Ladegeräts erfolgen kann. Hierzu muß das Ladegut jedoch wieder mit Hilfsgeräten wie einem Radschubgerät (Radlader) aufgenommen und zu der Hauptschnecke gefahren werden. Das Hin- und Herfahren des Radladers oder dergleichen ist jedoch umständlich und insbesondere wegen der Staubentwicklung störend.

Der Erfindung liegt die Aufgabe zugrunde, ein Fördergerät zum Ein- und Auslagern von Getreide oder dergleichen der eingangs genannten Gattung so weiterzuentwickeln, daß ein selbsttätiges Ein-und Ausladen von Flachlagern ohne die Gefahr, oberirdisch verlegte Belüftungskanäle oder dergleichen auf dem Boden der Flachlager zu beschädigen, mit technisch unkomplizierten Mitteln und einfacher Bedienung erfolgen kann.

Diese Aufgabe wird durch eine Ausgestaltung des Fördergeräts mit den kennzeichnenden Merkmalen des Anspruchs 1 dadurch gelöst, daß als Ladegerät eine Zuführschnecke vorgesehen ist, deren erstes Ende den Einzugskorb überdeckend an der Längsförderschnecke um eine im wesentlichen vertikale Achse schwenkbar gelagert ist, daß sich ein Endbereich der Längsförderschnecke auf einer Fahrkonsole abstützt, daß mit der Fahrkonsole ein Bock in Verbindung steht, der sich über dem ersten Ende der Zuführschnecke erhebt, daß oben an den Bock eine Seilrolle seitlich auslenkbar aufgehängt ist, über welche ein Seil läuft, welches einerseits mit dem Endbereich der Längsförderschnekke in Verbindung steht und andererseits an einer zu dem ersten Ende der Zuführschnecke entfernten Stelle an der Zuführschnecke angebracht ist.

Die hierbei eingesetzte Zuführschnecke kann auch als Räum- und Fegeschnecke bezeichnet werden. Sie nimmt beim Einlagern von Getreide in ihrem Schwenkbereich auf dem Boden abgekipptes Getreide auf, wobei sie sich selbsttätig und schnell in den Schütthaufen hineinarbeitet. Im Falle einer zu starken Überschüttung oder zu großer Förderleistung der Zuführschnecke kann diese angehoben werden. Umgekehrt kann bei ungenügender Förderleistung ein Absenken der Zuführschnecke mittels des Seils erfolgen. Damit ist eine einfache Einregulierung der Fahrleistung möglich. Durch weiteres Anheben der Zuführschnecke mittels des Seils kann diese in eine Position gebracht werden, in der ein selbsttätiges Rückschwenken ausgelöst wird. Die Fegebewegung kann dabei durch eine einzige Bedienungsperson durch Anheben und Absenken der Zuführschnecke gesteuert werden. Bei dem Auslagern von Getreide kann in ähnlicher Weise ein Plateau-Abtrag des Getreides in der eingestellten Höhe der Zuführschnecke erfolgen. Die Einstellung wird dazu besonders vorteilhaft in einer Plateauhöhe etwas oberhalb der Belüftungskanäle eingestellt. Diese können damit freigelegt und beschädigungsfrei geborgen werden. Daran anschließend kann die Zuführschnecke weiter abgesenkt werden, bis ein Bodenkontakt des bevorzugt an dem Ende der Zuführschnecke gelagerten Laufrads erfolgt.

Die Lagerung des Laufrads ist im einzelnen in Anspruch 5 angegeben. Es ist möglich, aber nicht unbedingt notwendig, das Laufrad als Antriebsrad auszubilden, da der Vorschub der Zuführschnecke in einen Getreideberg selbsttätig durch die Drehung der eigentlichen Schnecke selbst erfolgt, wenn sich diese in den Getreideberg einfrißt.

Die Einmannbedienung erfolgt bevorzugt an einem Schaltkasten, der außerhalb des Schwenkbereichs der Zuführschnecke in oder nahe dem Endbereich der Längsförderschnecke an dieser angeordnet ist.

Damit das beschriebene Anheben oder Absenken der Zuführschnecke mittels des Seils durch die Bedienungsperson zuverlässig durchgeführt werden kann, ist nach Anspruch 2 das Seil zweckmäßig auf eine Winde wickelbar, welche auf der Längsförderschnecke benachbart zu deren Endbereich gelagert ist. Die Seilführung erfolgt dabei bevorzugt über eine Seilrolle, die über eine Kette oben an dem Bock aufgehängt ist, der sich über dem Endbereich der Längsförderschnecke bzw. einer dort an der Längsförderschnecke vorgesehenen Fahrkonsole erstreckt. Dadurch, daß die Seilrolle an der Kette seitlich ausweichen kann, wird verhindert, daß die Zuführschnecke bei Nachrutschen des Getreides verstopft werden kann, da die Zuführschnecke hierbei seitlich ausweicht.

Im übrigen ist für ein selbsttätiges Vorwärtsschwenken der Zuführschnecke in dem Getreideberg wichtig, daß sich die Seilrolle, über welcher das Seil läuft, das mit dem Endbereich der Förderschnecke in Verbindung steht, über dem ersten Ende der Zuführschnecke vor der im wesentlichen vertikalen Achse erhebt, um die die Längsförderschnecke schwenkbar ist. Diese Anordnung ergibt sich im einzelnen aus der beigefügten und nachfolgend beschriebenen Zeichnung.

Der leichte, aber mechanisch widerstandsfähige Aufbau des Bocks, an dem die Seilrolle und das Seil aufgehängt sind, ergibt sich aus Anspruch 4, wonach der Bock eine Strebe aufweist, die einerseits oben an einem jochförmigen Träger des Bocks und andererseits an der Längsförderschnekke nahe deren Endbereich angebracht ist, wobei sich der jochförmige Träger auf der Fahrkonsole abstützt. Diese räumliche Struktur ist geeignet, sowohl Längskräfte in Richtung der Längsförderschnecke bzw. der zu dieser in Mittelstellung ausgerichteten Zuführschnecke als auch Querkräfte insbesondere bei einer Schwenkbewegung der Zuführschnecke aufzunehmen.

In einer besonders bevorzugten Ausführungsform nach Anspruch 6 ist die Zuführschnecke an ihrem ersten Ende dergestalt abgekröpft, daß sie außerhalb dieses Endes im wesentlichen horizontal verläuft. Mit dem horizontalen Abschnitt der Zuführschnecke kann diese dicht über ausgelegte Belüftungskanäle geführt werden und in dem gesamten Schwenkbereich das Getreide dicht über diesen Belüftungskanälen weitgehend abtragen. Allerdings ist die abgekröpfte Ausführung der Zuführschnecke aufwendiger in der Herstellung als eine unabgekröpfte, einfachere Form.

In einer vorteilhaften Weiterbildung des Fördergeräts ist an jedem von zwei Enden der Fahrkonsole, die sich im wesentlichen quer zu der Längsförderschnecke erstreckt, ein selbstlenkendes Spindelrad gelagert. Durch Herabdrehen der Spindelräder bis auf den Boden kann der Endbereich der Längsförderschnecke und das damit verbundene erste Ende der Zuführschnecke bei einem Umsetzen des Fördergeräts angehoben werden. Hierzu wird die Höhe der Spindelräder, die sich auf dem Boden abstützen, entsprechend eingestellt. Die selbstlenkenden Spindelräder erlauben im übrigen ein Verfahren des Fördergeräts zusammen mit seiner Zuführschnecke längs eines Getreideflachlagers, um während einer dabei erfolgenden Aufnahme von Getreide Transportfahrzeuge zu befüllen.

Nach Anspruch 8 ist die Zuführschnecke mit einem im wesentlichen vertikalen Lagerzapfen an der Längsförderschnecke lösbar gelagert. Der Lagerzapfen stellt dabei die im wesentlichen vertikale Achse dar, um welche das erste Ende der Längsförderschnecke geschwenkt werden kann. Infolge der lösbaren Lagerung ist es möglich, die Zuführschnecke von der Längsförderschnecke zu trennen, wenn das Fördergerät über größere Entfernungen transportiert bzw. verfahren werden soll. Zu diesem Zweck ist nach Anspruch 9 vorzugsweise unten an dem Einzugskorb der Längsförderschnecke eine Anhängerzugvorrichtung angebracht.

Die Erfindung wird im folgenden anhand einer Zeichnung mit zwei Figuren beschrieben, in welcher ein Abschnitt der Längsförderschnecke mit der an ihr angebrachten Zuführschnecke dargestellt ist. Es zeigt:
Fig. 1 eine Seitenansicht auf dieses im wesentlichen dargestellte Fördergerät und
Fig. 2 eine Draufsicht auf den in Fig. 1 gezeigten Abschnitt.

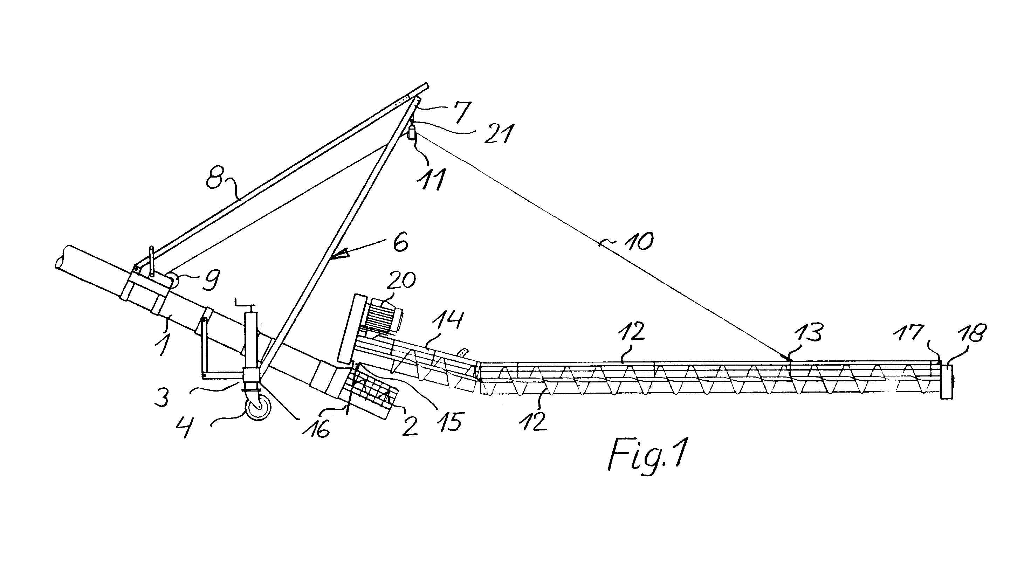

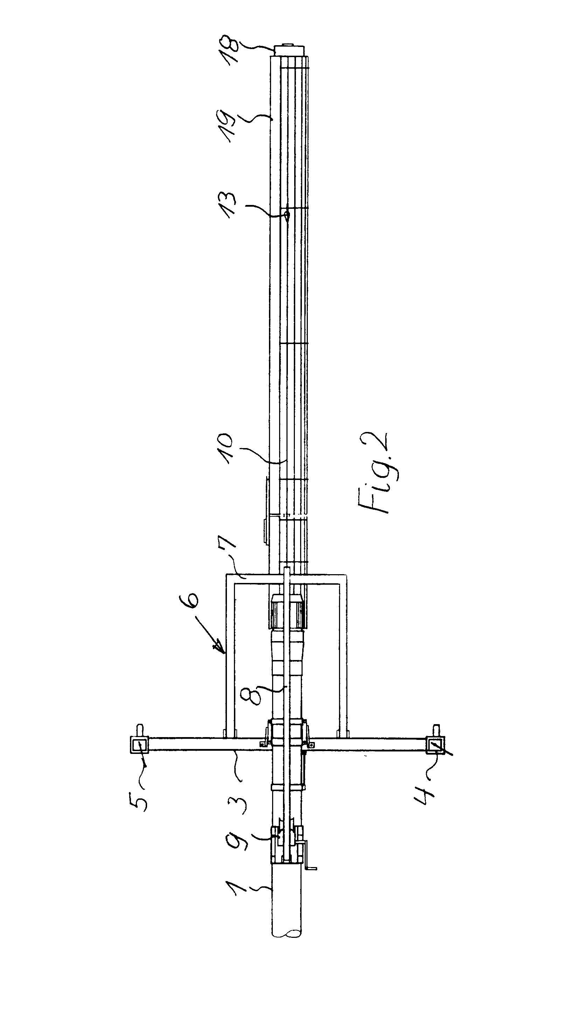

In dem linken Teil der Figuren 1 und 2 ist ein Abschnitt eines Längsförderers 1 dargestellt, der sich rechts von einem nicht gezeigten Fahrgestell befindet, welches die in Fig. 1 angedeutete geneigte Stellung des Längsförderers mitbedingt. Der Längsförderer ist als Schneckenförderer ausgebildet und weist einen Einzugskorb 2 in dem dargestellten Endbereich auf. Der Endbereich stützt sich auf einer Fahrkonsole 3 ab, an deren beiden Enden symmetrisch zu dem Längsförderer je ein selbstlenkendes Spindelrad 4 bzw. 5 gelagert ist.

Ein allgemein mit 6 bezeichneter Bock stützt sich einerseits auf der Fahrkonsole 3 und andererseits auf einem von der Fahrkonsole zu der Mitte des Längsförderers hin beabstandeten Stelle des Längsförderers 1 ab. Im einzelnen besteht der Lagerbock 6 aus einem jochförmigen Träger 7, der an der Fahrkonsole 3 angebracht ist, sowie einer Strebe 8, die einerseits an der oberen Mitte des jochförmigen Trägers und andererseits unten an dem Längsförderer im Abstand zu dessen Einzugskorb 2 angreift.

In der Nähe der unteren Anbringungsstelle der Strebe 8 ist auf dem Längsförderer eine Winde 9 gelagert, von der ein Seil 10 über eine Seilrolle 11 mittig unter dem oberen Abschnitt des jochförmigen Trägers 7 zu einer Zuführschnecke 12 verläuft, und zwar zu einer Stelle 13 der Zuführschnecke, die zu einem ersten Ende 14 der Zuführschnecke entfernt ist.

An der ersten Stelle der Zuführschnecke ragt von dieser ein annähernd vertikaler Lagerzapfen 15 nach unten in ein entsprechendes Lager des Längsförderers nahe dessen Einzugskorb 2, welches mit einer annähernd vertikalen Achse 16 koaxial ist.

An einem zweiten Ende 17 ist ein Laufrad 18 achsparallel zu der Zuführschnecke 12 gelagert. Das Laufrad 18 kann mit der eigentlichen Zuführschnecke 12 verbunden sein. Diese eigentliche Zuführschnecke befindet sich vor einer Wand 19. Diese Anordnung der eigentlichen Zuführschnecke vor der Wand 19 ergibt eine Rechtsdrehung der Zuführschnecke (in der Draufsicht gemäß Fig. 2), wenn sich diese in einen Getreideberg einfrißt. Ein die Zuführschnecke antreibender Schneckenantrieb 20 ist an dem ersten Ende der Zuführschnecke angeordnet.

Zu der Aufhängung der Zuführschnecke, die eine seitliche Ausweichbewegung erlaubt, wenn die Zuführschnecke in Gefahr ist, durch Nachrutschen des Getreides zugeschüttet zu werden, gehört eine Kette 21, an welcher die beschriebene Seilrolle 11 aufgehängt ist. Die Kette erlaubt eine seitliche Ausweichbewegung bei trotzdem sicherer Führung der Zuführschnecke.

Aus Fig. 1 ist weiterhin ersichtlich, wie die Zuführschnecke an ihrem ersten Ende 14 abgekröpft ist, so daß sich der überwiegende Teil der Zuführschnecke horizontal und parallel zu dem nicht dargestellten Lagerboden befindet.

Wie beschrieben, kann mit dem Längsförderer kombiniert mit der Zuführschnecke Getreide aus einer Stellposition des Gerätes mit großer Förderleistung verladen werden.

Zum Transport des Fördergeräts an einen anderen Ort kann die Zuführschnecke von dem Längsförderer getrennt werden, indem deren erstes Ende 14 angehoben wird, so daß der Lagerzapfen 15 außer Eingriff mit dem entsprechenden Lager an dem unteren Abschnitt des Längsförderers gelangt. Der Längsförderer 1 kann dann separat verfahren werden, indem eine Zugmaschine an einem Haken 22 unter dem Einzugskorb 2 des Längsförderers angreift.

## Patentansprüche

1. Fördergerät zum Ein- und Auslagern von Getreide oder dergleichen auf bzw. von Flachlagern, mit einer Längsförderschnecke (1), die ein annähernd mittig angeordnetes Fahrgestell und einen Einzugskorb (2) aufweist, der mit einem Ladegerät beschickbar ist,
dadurch gekennzeichnet,
daß als Ladegerät eine Zuführschnecke (12) vorgesehen ist, deren erstes Ende (14) den Einzugskorb (2) überdeckend an der Längsförderschnecke (1) um eine im wesentlichen vertikale Achse (16) schwenkbar gelagert ist, daß sich ein Endbereich der Längsförderschnecke (1) auf einer Fahrkonsole (3) abstützt, daß mit der Fahrkonsole ein Bock (6) in Verbindung steht, der sich über dem ersten Ende der Zuführschnecke (12) erhebt, daß oben an den Bock (6) eine Seilrolle (11) seitlich auslenkbar aufgehängt ist, über welche ein Seil (10) läuft, welches einerseits mit dem Endbereich der Längsförderschnecke (1) in Verbindung steht und andererseits an einer zu dem ersten Ende der Zuführschnecke entfernten Stelle (13) an der Zuführschnecke (12) angebracht ist.

2. Fördergerät nach Anspruch 1,
dadurch gekennzeichnet,
daß das Seil (10) auf eine Winde (9) wickelbar ist, welche auf der Längsförderschnecke (1) benachbart zu deren Endbereich gelagert ist.

3. Fördergerät nach Anspruch 1 oder 2,
dadurch gekennzeichnet,
daß die Seilrolle (11) über eine Kette (21) oben an dem Bock aufgehängt ist.

4. Fördergerät nach einem der Ansprüche 1 bis 3,
dadurch gekennzeichnet,
daß der Bock (6) eine Strebe (8) aufweist, die einerseits oben an einem jochförmigen Träger (7) des Bocks und andererseits an der Längsförderschnecke (1) nahe deren Endbereich angebracht ist, und daß sich der jochförmige Träger (7) auf der Fahrkonsole (3) abstützt.

5. Fördergerät nach einem der vorangehenden Ansprüche,
dadurch gekennzeichnet,
daß an einem zweiten Ende (17) der Zuführschnecke (12), das zu dem ersten Ende entfernt ist, ein Laufrad (18) achsparallel zu der Zuführschnecke (12) an dieser gelagert ist.

6. Fördergerät nach einem der vorangehenden Ansprüche,
dadurch gekennzeichnet,
daß die Zuführschnecke (12) an ihrem ersten Ende (14) dergestalt abgekröpft ist, daß sie außerhalb dieses Endes im wesentlichen horizontal verläuft.

7. Fördergerät nach einem der Ansprüche 1 bis 4,
dadurch gekennzeichnet,
daß an jedem von zwei Enden der Fahrkonsole (3), die sich im wesentlichen quer zu der Längsförderschnecke erstreckt, ein selbst-lenkendes Spindelrad (4 bzw. 5) gelagert ist.

8. Fördergerät nach einem der vorangehenden Ansprüche,
dadurch gekennzeichnet,
daß die Zuführschnecke (12) mit einem im wesentlichen vertikalen Lagerzapfen (15) an der Längsförderschnecke (1) lösbar gelagert ist.

9. Fördergerät nach Anspruch 8,
dadurch gekennzeichnet,
daß unten an dem Einzugskorb (2) der Längsförderschnecke (1) eine Anhängerzugvorrichtung (22) angebracht ist.
